# EUROPÄISCHE PATENTSCHRIFT

(11) **EP 1 078 785 B1**
(45) Veröffentlichungstag und Bekanntmachung des Hinweises auf die Patenterteilung: **13.08.2008**
(21) Anmeldenummer: 00117580.1
(22) Anmeldetag: 16.08.2000
(51) Int. Cl.: B60G 21/05, F16F 1/14

(54) **Verbundlenkerhinterachse**
Twist-beam rear axle
Essieu arrière à traverse déformable en torsion

(30) Priorität: 20.08.1999 DE 19939485
(43) Veröffentlichungstag der Anmeldung: 28.02.2001
(73) Patentinhaber: ADAM OPEL AG, 65423 Rüsselsheim (DE)
(72) Erfinder: Graf, Gerhard, Dipl.-Ing. (TU), 64569 Nauheim (DE); Schmidt, Rudolf, 65428 Rüsselsheim (DE); Harzheim, Lothar, Dr. Dipl.-Phys., 55130 Mainz (DE)
(74) Vertreter: Daniel, Ulrich W.P.

(56) Entgegenhaltungen:
- EP-A- 0 681 932
- DE-U- 29 809 241

## Beschreibung

Die Erfindung bezieht sich auf eine Verbundlenkerhinterachse mit zwei starren Längslenkern, die jeweils mit einem Ende um eine Horizontalachse schwenkbar an einer Fahrzeugkarosserie gelagert sind und an deren jeweils anderem Ende ein Fahrzeugrad um eine Achse drehbar gelagert ist, und mit einer die Längslenker verbindenden biegesteifen, aber torsionsweichen Querstrebe, die in ihrem mittleren Torsionsbereich ein U-förmiges Profil aufweist und deren Endbereiche im Übergang zum Längslenker ein geschlossenes im wesentlichen kreisförmiges Profil besitzen, wobei zwischen dem Torsionsbereich und den Endbereichen jeweils ein stetiger Übergang erfolgt, der durch eine Verlängerung des Torsionsbereichs unter Beibehaltung seiner Profilform und einer Lasche gebildet ist, die sich von einer Seite zur anderen Seite des Profils erstreckt und es dabei schließt.

Derartige Verbundlenkerhinterachsen sind schon vielfach beschrieben worden. So beschreibt zum Beispiel die DE 43 30 192 A1 eine, bei der die Querstrebe aus einem einlagigen U-Profil mit zueinander parallel verlaufenden Schenkeln gebildet, wobei die beiden Enden der Querstrebe in die seitlich offenen Längslenker eingeschoben sind. Eine weitere Achse dieses Typs ist in der DE 195 42 523 A1 dargestellt. Hierbei ist die Querstrebe aus einem Rohr gebildet, das im mittleren Abschnitt U-förmig eingedrückt ist und damit ein doppellagiges U-Profil bildet. Die Enden behalten ihre Kreisform bei und werden mit den Lenkern der Hinterachse verschweißt.

Bei all diesen Achsen ist der Übergang zwischen dem mittleren torsionsweichen Bereich (Torsionsbereich) zum steifen Längslenker im Hinblick auf eine möglichst hohe Dauerhaltbarkeit kritisch. In der zuerst genannten DE 43 30 192 A1 sind die Längslenker daher schuhartig aufgeweitet, und geben damit der eingeschobenen Querstrebe im Übergangsbereich die nötige Unterstützung. In der an zweiter Stelle genannten Schrift, der DE 195 42 523 A1, wird vorgeschlagen, den Übergang zwischen dem U-förmig eingedrückten Bereich und den kreisförmigen Enden möglichst gleichmäßig erfolgen zu lassen. Die Eindrückung erfolgt in diesem Bereich nicht vollständig. Vielmehr bildet der nur zum Teil eingedrückte Abschnitt des Rohres eine Lasche, die am oberen Rand des unverändert gebliebenen U-förmigen Abschnitts anschließt, so daß zwischen den genannten Abschnitten ein im Querschnitt betrachtet extrem sichelförmiger Raum eingeschlossen ist.

Im Stand der Technik ist weiterhin eine Verbundlenkerhinterachse beschrieben, deren Querstrebe durch ein Aluminiumstrangpressprofil dargestellt ist (EP 0 861 744 A2). Bei dieser Form lassen sich die Belastungen der Strebe im Übergangsbereich zu den Längslenkern nur schwer in den Griff bekommen.

Ähnliches gilt für die Verbundlenkerhinterachse gemäß der DE 44 41 971 A1, oder EP 0 681 932 bei der ein geschlitztes Rohr die Querstrebe bildet. Auch hier fehlt es an Möglichkeiten, den Übergangsbereich kontrolliert zu versteifen.

Die Erfindung beruht auf dem Problem, eine Verbundlenkerhinterachse mit einer Querstrebe zu schaffen, die dauerhaltbar ist, also eine ausreichende Zahl von Lastwechseln übersteht, ohne Schaden im Übergangsbereich zu nehmen. Dies soll mit einfachen Mitteln erreicht werden, dies bedeutet, dass insbesondere die Strebe leicht herzustellen ist und dass die Verbindung zu den Lenkern in einfacher Weise realisiert werden kann.

Es wird daher vorgeschlagen, daß die Verbindung zwischen der Lasche und dem Profil entlang einer Verbindungslinie erfolgt, die stetig vom Boden des U-förmigen Profils in Richtung auf dessen Rand ansteigt.

Dadurch laßt sich die Spannungsverteilung im Übergangsbereich im Hinblick auf eine gute Dauerfestigkeit einstellen. Insbesondere durch die direkte Verstrebung der beiden Schenkel des U-förmigen Profils durch die Lasche ist eine Art fachwerkartiger Aufbau gegeben, der im Stand der Technik nicht vorliegt. Dort schließt die Lasche stets an den oberen Rand des U-förmigen Profils an (DE 195 42 523 A1). Die Lange des Übergangsbereich bestimmt sich damit durch die Lange der Lasche, die entsprechend den aufzunehmenden Belastungen gewählt wird.

Beste Ergebnisse erzielt man, wenn die Verbindungslinle die Schnittlinie zwischen dem U-förmigen Profil und einer gedachten, schräg zur Bodenlinie des U-förmigen Profils verlaufenden Ebene ist.

Der torsionsweiche Torsionsbereich I besteht aus einem halbkreisförmigen Bodenabschnitt und daran anschließende Wandstreifen, die im Übergangsbereich kontinuierlich kleiner werden und vorzugsweise im Anschluß an den Endbereich verschwinden. Dadurch ergibt sich ein kontinuierlicher Übergang zwischen dem U-förmigen Profil und dem kreisförmigen Endbereich, was die Herstellung der Achse wesentlich vereinfacht. Außerdem kann durch die Variation der Höhe der Wandstreifen der Spannungsverlauf im Übergangsbereich beeinflußt werden.

Um u. a. die Torsionsweichheit im Torsionsbereich zu begrenzen und den Spannungsvenlauf im Übergangsbereich zu bestimmen, kann es notwendig sein, die freien Enden der Wandstreifen wulstartig auszuführen. Dabei kann die Wulstdicke über die Länge der Querstrebe variiert werden.

Die Form der Lasche, die sich vom Boden des Profis zum inneren Rand des Endbereichs erstreckt, ist vorzugsweise im Querschnitt betrachtet konvex; sie kann aber auch zunächst konkav und erst im Übergang zum Endbereich konvex gekrümmt werden. Dabei braucht der Krümmungsradius von Schnitt zu Schnitt nicht konstant bleiben sondern kann sich kontinuierlich ändern.

Es bietet sich an, die Querstrebe aus einer Aluminlumlegierung herzustellen und zwar entweder in einem Guß- oder einem Druckgussverfahren oder insbesondere in einem Thixoformingverfahnen.

Im folgenden wird anhand eines Ausführungsbeispiels die Erfindung näher erläutert. Dazu zeigen:
- Fig. 1: eine räumliche Darstellung der Verbundlenkerhinterachse;
- Fig. 2: die räumliche Darstellung der Querstrebe der Verbundlenkerhinterachse;
- Fig. 3a bis 3e: Querschnitte der Querstrebe in einer ersten Ausführungsform mit einer konvex geformten Lasche;
- Fig. 4a bis 4e: Querschnitte der Querstrebe in einer zweiten Ausführungsform mit einer konkav geformten Lasche sowie
- Fig. 5: eine Seitenansicht der Querstrebe im Übergangsbereich.

Die Verbundlenkerhinterachse 1 besteht aus zwei Längslenkern 2, 3, die über eine biegesteife aber torsionsweiche Querstrebe 4 miteinander verbunden sind. An dem jeweils einen Ende der Längslenker 2, 3 befindet sich ein Lagerauge 5, 6 zur Aufnahme eines Lagers, mit denen die Achse verschwenkbar an der Fahrzeugkarosserie befestigt ist. Am jeweils anderen Ende sind die Längslenker zu Radträgern 7, 8 ausgeformt; außerdem befindet sich dort jeweils eine Trägerplatte zur Abstützung der Achsfeder.

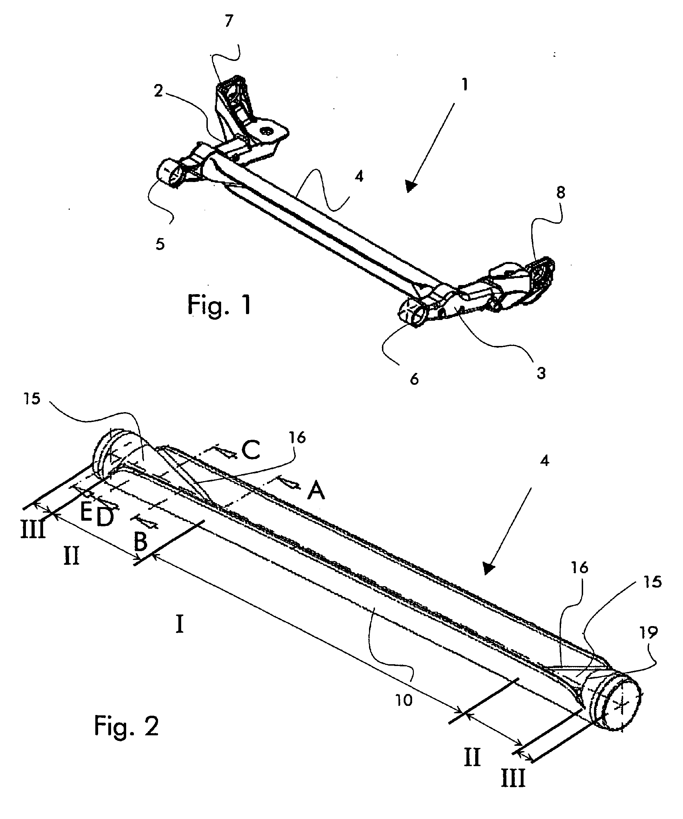

Wie Fig. 2 zeigt, wird die Querstrebe 4 als gesondertes Bauteil ausgeführt, das mit den Längslenkern 2, 3 verschweißt, verklebt oder in sonstiger Weise verbunden wird. Mit Fortschreiten der Produktionstechnologie, z. B. des Thixoformingverfahrens, wäre es auch denkbar, die Längslenker 2, 3 sowie die Querstrebe 4 aus einem Stück zu fertigen.

Die Querstrebe 4 besteht aus einem mittleren Abschnitt I, den beiden Endabschnitten III und den Übergangsbereichen II zwischen dem Torsionsbereich I und den Endabschnitten III.

Der Torsionsbereich I wird von einem U-förmigen Profil 10 gebildet, das sich in dieser Form in die Übergangsbereiche II fortsetzt.

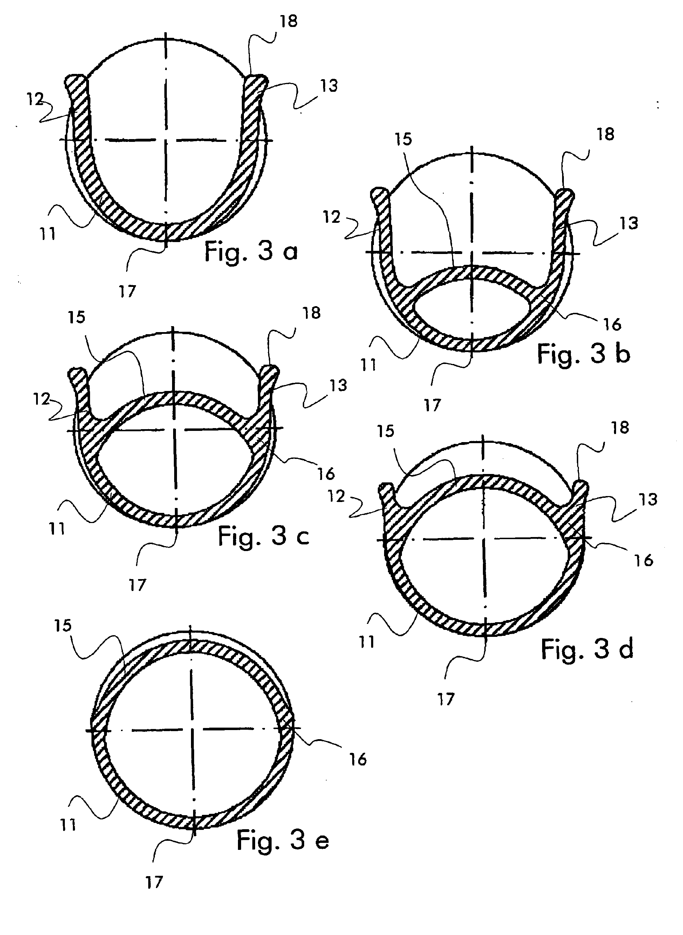

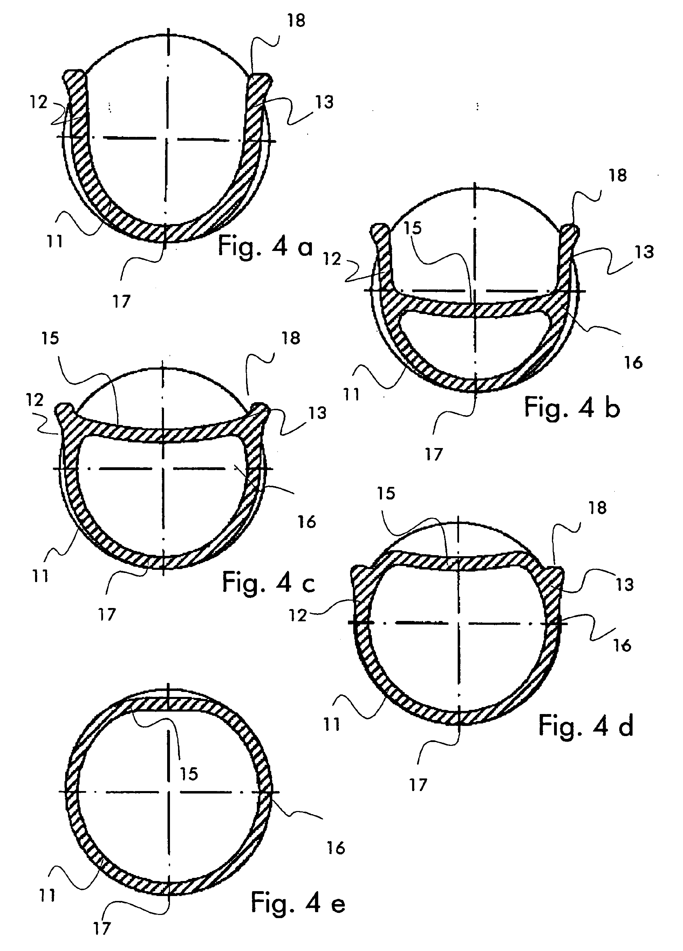

Wie die Fig. 3a bzw. 4a zeigt, besteht das U-förmige Profil 10 aus einer Wanne 11, die einen Winkel von ca. 180° einschließt sowie daran anschließenden Wandstreifen 12, 13, die annähernd tangential an die Wannenränder ansetzen. Die oberen freien Kanten 18 der Wandstreifen 12, 13 sind wulstförmig verbreitert.

Die Endbereiche III sind kreisförmig ausgebildet, was durch die dünne Linien in den Fig. 3a - 3e bzw. 4a - 4e angedeutet ist. Auf diese Weise kann die Querstrebe in jeder beliebigen Winkellage an die ebenfalls kreisförmigen Ansätze an den Längslenkern angesetzt werden. Je nach Winkellage stellt sich ein anderer Schubmittelpunkt und damit eine andere Achskinematik ein, die damit frei wählbar ist, ohne dass die Konstruktion geändert werden braucht.

Wie in der Fig. 2 gut zu erkennen ist, verläuft die Wanne 11 unmittelbar in den unteren Abschnitt des Endbereichs II ein, während die Höhe der Wandstreifen 12, 13 im Übergangsbereich II langsam kleiner und im Anschluß an den Endbereich II zu Null wird.

Eine Lasche 15 erstreckt sich ausgehend von der oberen einen Halbkreis beschreibenden Begrenzungslinie 19 des Endabschnitts III in das U-förmige Profil bis zum Boden des Profils. Die Lasche 15 ist damit zwischen den beiden Schenkeln des Profils aufgespannt, so dass sich ein geschlossener kegelartiger Raum bildet. Die Laschenränder schließen in etwa senkrecht an die Profilschenkel an, so daß sich jeweils eine T-förmige Verbindung entlang einer Verbindungslinie 16 einstellt.

Der Verlauf der Lasche im U-förmigen Profil läßt sich unterschiedlich gestalten. Zum einen kann eine rein konvexe Form vorgesehen werden, wie dies die Querschnitte der Fig. 3b bis 3e zeigen: Die Schnittlinien sind in der Fig. 2 mit entsprechenden Buchstaben A bis E bezeichnet. Die Lasche 15 verläuft dabei im wesentlichen senkrecht in die Wand des U-förmigen Profils ein. Der von der Lasche 15 im Profil eingeschlossene Raum hat im Querschnitt betrachtet die Form einer Linse. Der Übergang in den kreisförmigen Endbereich III erfolgt, wie in Fig. 3e angedeutet, kontinuierlicher. In diesem Schnitt erkennt man außerdem, dass die Wandstreifen 12, 13 an dieser Stelle verschwunden sind.

Bei einer konkaven Ausführung der Lasche 15 ergeben sich die Querschnitte gemäß den Fig. 4b bis 4e. Der eingeschlossene Raum hat jeweils die Form eines Kreisabschnittes.

Die konkave Form wird dabei möglichst weit beibehalten: Erst kurz vor dem Übergang in den kreisrunden Endbereich III (Fig. 4e) erfolgt ein Übergang in eine mehr konvexe Form.

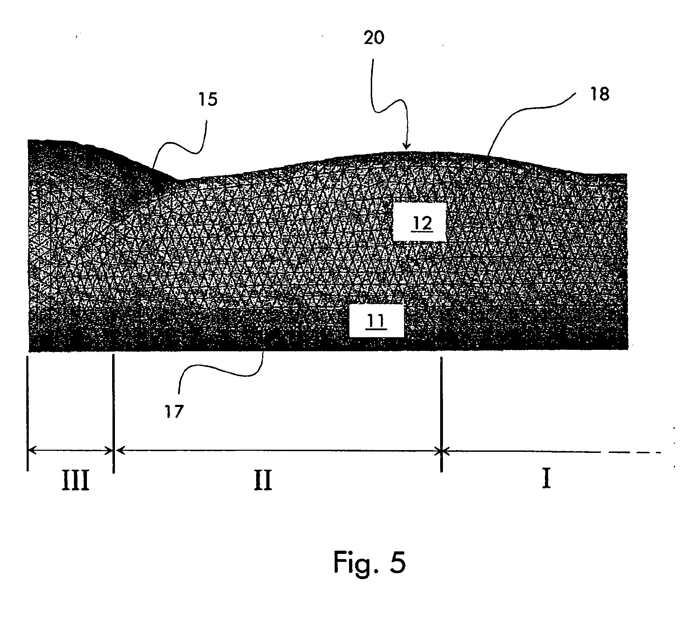

Auch der Höhenverlauf des freien Randes 18 der Wandstreifen 12, 13 hat einen Einfluß auf die Spannungsverteilung im Übergangsbereich II. Fig. 5 zeigt daher einen solchen Übergang, bei dem man erkennt, dass die Höhenlinie, ausgehend von der Höhe im mittleren Torsionsbereich I zunächst leicht ansteigt, um dann zum Endbereich III hin auf Null abzufallen. Der leichte Bogen 20 erstreckt sich nahezu über den gesamten Übergangsbereich II und beginnt noch im Torsionsbereich I. Der Zenit des Bogens liegt höher als der Rand im Torsionsbereich I. Der Abfall auf Null erfolgt in einem relativ kurzen Abschnitt.

## Patentansprüche

1. Verbundlenkerhinterachse mit zwei starren Längslenkern, die jeweils mit einem Ende um eine Horizontalachse schwenkbar an einer Fahrzeugkarosserie gelagert sind und an deren jeweils anderem Ende ein Fahrzeugrad um eine Achse drehbar gelagert ist, und mit einer die Längslenker verbindenden biegesteifen, aber torsionsweichen Querstrebe, die in ihrem mittleren Torsionsbereich ein U-förmiges Profil aufweist und deren Endbereiche im Übergang zum Längslenker ein geschlossenes im wesentlichen kreisförmiges Profil besitzen, wobei zwischen dem Torsionsbereich und den Endbereichen jeweils ein stetiger Übergang erfolgt, der durch eine Verlängerung des Torsionsbereichs unter Beibehaltung seiner Profilform und einer Lasche gebildet ist, die sich von einer Seite zur anderen Seite des Profils erstreckt und es dabei schließt, **dadurch gekennzeichnet, daß** die Verbindung zwischen der Lasche (15) und dem Profil (10) entlang einer Verbindungslinie (16) erfolgt, die stetig vom Boden des U-förmigen Profils (10) in Richtung auf dessen Rand (18) ansteigt.

2. Verbundlenkerhinterachse nach Anspruch 1, **dadurch gekennzeichnet, daß** die Verbindungslinie (16) die Schnittlinie zwischen dem U-förmigen Profil (10) und einer gedachten, schräg zur Bodenlinie (17) des U-förmigen Profils (10) verlaufenden Ebene ist.

3. Verbundlenkerhinterachse nach Anspruch 1 oder 2, **dadurch gekennzeichnet, daß** das Profil im Torsionsbereich (I) und im Übergangsbereich (II) im Bodenabschnitt eine halbkreisförmige Wanne (11) bildet, an deren oberen Kanten sich in wesentlich tangentialer Richtung erstreckende Wandstreifen (12, 13) anschließen, die die Schenkel des U-förmigen Profils (10) bilden und deren jeweilige Höhe über die obere Kante der Wanne im Übergangsbereich (II) zum Endbereich (III) hin kontinuierlich kleiner wird.

4. Verbundlenkerhinterachse nach Anspruch 3, **dadurch gekennzeichnet, daß** die Höhe der Wandstreifen (12, 13) im Anschluß an den Endbereich (III) zu Null wird.

5. Verbundlenkerhinterachse nach Anspruch 3 oder 4, **dadurch gekennzeichnet, daß** die freien Ränder (18) der Wandstreifen (12, 13) einen Wulst bilden.

6. Verbundlenkerhinterachse nach einem der vorhergehenden Ansprüche, **dadurch gekennzeichnet, daß** die Lasche (15) über ihre Länge jeweils in einer Querschnittsebene betrachtet gewölbt ist.

7. Verbundlenkerhinterachse nach Anspruch 6, **dadurch gekennzeichnet, daß** die Lasche (15) über ihre gesamte Länge jeweils in einer Querschnittsebene betrachtet konvex gekrümmt ist.

8. Verbundlenkerhinterachse nach Anspruch 6, **dadurch gekennzeichnet, daß** die Lasche (15) im Anschluß an den Torsionsbereich (I) jeweils in einer Querschnittsebene betrachtet zunächst konkav und im Übergang zum Endbereich (III) konvex gekrümmt ist.

9. Verbundlenkerhinterachse nach einem der Ansprüche 1-8, **dadurch gekennzeichnet, daß** die Wandstärke in allen Bereichen der Querstrebe belastungs- und funktionsabhängig variiert ist.

10. Verbundlenkerhinterachse nach einem der vorhergehenden Ansprüche, **dadurch gekennzeichnet, daß** der Rand (18) des Profils (10) im Übergangsbereich (II) eine Erhöhung gegenüber seinem Verlauf im Torsionsbereich (I) aufweist.

11. Verbundlenkerhinterachse nach einem der vorhergehenden Ansprüche, **dadurch gekennzeichnet, daß** diese aus einem Leichtmetall, vorzugsweise aus einer Aluminium-Legierung besteht.

12. Verbundlenkerhinterachse nach Anspruch 11, **dadurch gekennzeichnet, daß** diese in einem Aluminium-Gußverfahren hergestellt ist.

13. Verbundlenkerhinterachse nach Anspruch 12, **dadurch gekennzeichnet, daß** diese in einem Aluminium-Druckgußverfahren, bevorzugt Thixoforming-Verfahren hergestellt ist.

## Claims

1. Twisted beam rear axle with two stiff trailing arms which each have one end mounted to a motor vehicle body by a swivel-mounted horizontal axle; on each of the other ends, a motor vehicle wheel is swivel-mounted on an axle and to a stiff yet torsion flexible cross member which connects with one of the trailing arms; said cross member comprises a U-shaped profile in its middle torsion region and its terminal regions have a closed, essentially circular profile on the crossovers to the trailing arms, wherein between the torsion region and the terminal region one crossover follows; this is formed by a lengthening of the torsion region while retaining its profile form, and a bracket which stretches from one side of the profile to the other and closes it, **characterized in that** the connection between the bracket (15) and the profile (10) follows along a conduit (16), which rises from the bottom of the U-shaped profile (10) in the direction of the profile's edge.

2. Twisted beam rear axle according to claim 1,
**characterized in that** the conduit (16) is the section line between the U-shaped profile (10) and is a plane which runs transversely to the bottom line (17) of the U-shaped profile (10).

3. Twisted beam rear axle according to claim 1 or 2,
**characterized in that** the profile in the torsion area (I) and in the crossover area (II) form a semicircular tub (II) in the bottom section; on the upper edges of this tub, wall strips (12) are attached, stretching in an essentially tangential direction. These form the handle of the U-shaped profile (10); the height of said strips become continually smaller over the upper edge of the tub from the crossover area (II) to the end area (III).

4. Twisted beam rear axle according to claim 3,
**characterized in that** the height of the wall strips (12, 13) becomes zero in the alignment of the terminal region (III).

5. Twisted beam rear axle according to claim 3 or 4,
**characterized in that** the free edges (18) of the wall strips (12, 13) form a torus.

6. Twisted beam rear axle according to one of the previous claims, **characterized in that** the bracket (15) over its length, when viewed from a cross sectional plane, is domed.

7. Twisted beam rear axle according to claim 6,
**characterized in that** the bracket over its entire length is always convexly bent when viewed from a cross sectional plane.

8. Twisted beam rear axle according to claim 6,
**characterized in that** the bracket (15), when connected to the torsion region (I) and viewed from a cross sectional plane, is at first concave and then, in its crossover to the terminal region (III), is convexly bent.

9. Twisted beam rear axle according to one of the claims 1 through 8, **characterized in that** the wall strength in all regions of the cross member is varied depending on capacity and function.

10. Twisted beam rear axle according to one of the previous claims, **characterized in that** the edge (18) of the profile (10) in the crossover region (II) comprises an elevation in comparison with the progress in the torsion region.

11. Twisted beam rear axle according to one of the previous claims, **characterized in that** said axle is made up of a light metal, preferably an aluminum alloy.

12. Twisted beam rear axle according to claim 11,
**characterized in that** said axle is manufactured through an aluminum casting procedure.

13. Twisted beam rear axle according to claim 12,
**characterized in that** said axle is manufactured through an aluminum pressure casting procedure, preferably a Thixoforming procedure.

## Revendications

1. Essieu arrière à traverse déformable en torsion comportant deux bras longitudinaux rigides, dont chacun possède une extrémité pivotante autour d'un axe horizontal placé sur un corps de véhicule à moteur et une extrémité où est déposé une roue de véhicule tournante autour d'un axe, et comportant une traverse rigide mais permettant facilement une torsion copulative avec les bras longitudinaux et présente au niveau de sa zone centrale de torsion un profilé en forme de U, alors que ces extrémités possèdent chacune au niveau de leurs passages respectifs aux bras longitudinaux, un profilé fermé ayant pour l'essentiel une forme circulaire, une transition continue étant conformée entre la zone de torsion et chacune des extrémités, étant donné que cette transition est formée par un prolongement de la zone de torsion sous la conservation de sa forme de profilé et une patte qui s'étend d'un côté à l'autre du profilé tout en se fermant, **caractérisé en ce que** la liaison entre la patte(15) et le profilé (10) s'effectue le long d'une ligne de liaison (16), qui monte d'une façon continue du fond du profilé (10) en forme de U, en direction de son bord (18).

2. Essieu arrière à traverse déformable en torsion selon revendication 1, **caractérisé en ce que** la ligne de liaison (16) présente l'interface entre le profilé (10) en forme de U et d'un plan imaginaire qui passe obliquement par rapport à la ligne de fond (17) du profilé (10) en forme de U.

3. Essieu arrière à traverse déformable en torsion selon revendication 1 ou 2, **caractérisé en ce que** le profilé forme dans la section du fond, au niveau de la zone de torsion (I) et de la zone de transition (II), un bac (11) demi-circulaire, où viennent se joindre, au niveau de ces bords supérieurs, des sections paroi (12, 13) qui forment les ailes du profilé (10) en forme de U et dont la hauteur respective diminue de façon continue, du bord supérieur du bac au niveau de la zone de transition (II) vers la zone terminale ( III).

4. Essieu arrière à traverse déformable en torsion selon revendication 3, **caractérisé en ce que** la hauteur des sections de paroi (12, 13) s'annule au niveau de la zone terminale (III) .

5. Essieu arrière à traverse déformable en torsion selon revendication 3 ou 4, **caractérisé en ce que** les bords libres (18) des sections de paroi (12, 13) forment un bourrelet.

6. Essieu arrière à traverse déformable en torsion selon l'une des revendications précédentes, **caractérisé en ce que** la patte (15), vu dans un plan transversal respectif, est voûtée en longueur.

7. Essieu arrière à traverse déformable en torsion selon revendication 6, **caractérisé en ce que** la patte (15), vu dans un plan transversal respectif, est incurvée sur toute sa longueur.

8. Essieu arrière à traverse déformable en torsion selon revendication 6, **caractérisé en ce que** la patte (15) vu dans un plan transversal respectif, au niveau de la zone de torsion (I), est incurvée tout d'abord concave puis convexe, au niveau de la transition à la zone terminale (III).

9. Essieu arrière à traverse déformable en torsion selon l'une des revendications 1 - 8, **caractérisé en ce que** l'épaisseur de la paroi dans toutes les zones de la traverse varie selon la charge et la fonction.

10. Essieu arrière à traverse déformable en torsion selon l'une des revendications précédentes, **caractérisé en ce que** le bord (18) du profilé (10) dans la zone de transition (II), présente une surélévation par apport à son cheminement dans la zone de torsion (I).

11. Essieu arrière à traverse déformable en torsion selon l'une des revendications précédentes, **caractérisé en ce que** ce dernier est composé d'un métal léger, de préférence d'un alliage en aluminium.

12. Essieu arrière à traverse déformable en torsion selon revendication 11, **caractérisé en ce que** ce dernier est fabriqué en utilisant une technique de coulée d'aluminium.

13. Essieu arrière à traverse déformable en torsion selon revendication 12, **caractérisé en ce que** ce dernier est fabriqué en utilisant une technique de coulée d'aluminium sous pression, de préférence en utilisant le procédé de thixoformage.
